# EUROPEAN PATENT APPLICATION

(11) **EP 2 063 364 A1**
(43) Date of publication of application: **27.05.2009**
(21) Application number: 07022390.4
(22) Date of filing: 19.11.2007
(51) Int. Cl.: G06F 17/30

(54) **Module for building database queries**

(71) Applicant: SIEMENS AKTIENGESELLSCHAFT, 80333 München (DE)
(72) Inventor: Copello, Paolo, 16035 Rapallo (IT)
(74) Representative: Fischer, Michael

(57) **Abstract**

Module for building a query on a database 3, comprising a client-side module part 1 and a server-side module part 4, creating an abstract query object 8 given user-defined query criteria, whereby the user-defined query criteria comprises alias names for elements of data tables 11 contained in the database, sending 5a the abstract query object 8 to a parse and validate entity 4a, the server-side module part comprises means for extracting mapping information between the alias names and real names of the elements of the data tables 11 from a private configuration table 10, the said private configuration table 10 storing the mapping information according to a valid internal structure of the database at the time of extraction, creating a query on the database 3 by extracting a query configuration from the abstract query object and resolving the alias names contained in the said query configuration by searching the mapping information of the private configuration table, performing the query on the data tables 11, adapting the query results to changes made in said internal structure of the database, extracting 5c a list of available alias names from the mapping information, forwarding the list of the available alias names to the client-side module part, forwarding 5b query results to the client-side module part 1.

## Description

The invention relates to a module for building database queries, especially in case a user needs to retrieve information from a relational database.
The module for building database queries will be further referred to as module.

Today the importance of databases has become tremendous because of the fact that more and more activities and procedures have been computerized due to different reasons, one of them being the efficiency of such systems. Huge amounts of information have to be stored and provided to computer systems. This fact obviously makes handling of databases in an efficient manner very important. In order to retrieve, append, modify specific data in a database, a user has to utilize different methods to find a required data set. Typically, a user needing to retrieve information from a database frequently has to apply complex filters and sorting to a search, in order to find exactly the required data set. Thus, queries have to be flexible and customizable in order to easily be adapted to changing needs of the user. The queries are usually based on SQL (Structured Query Language), so in order to build them in a correct and efficient way, the user has to possess a deep knowledge of the SQL and a structure of the database. Existing solutions provide a fixed range of parameters and
methods which are used to perform a fixed range of queries. Other solutions allow the user to submit SQL queries directly, sometimes employing a user-friendly representation of database objects to build their queries. Yet another solution, known as "xml-sql", which is implemented by Microsoft SQL Server allows embedding SQL queries in an XML (Extensible Markup Language) document, however this solution has the drawback, that the user is forced to know an internal structure of the database. A further disadvantage of the presented state of the art solutions is that the user has to have knowledge of SQL to define custom queries. Yet a further disadvantage is that a custom query constructed using one of the above mentioned methods is dependent on the internal structure of the database, thus making the query usable for the said internal structure only.

One goal to be achieved is to be seen in decoupling a creation of queries from underlying internal database structures and knowledge of SQL, in other words avoiding that a user creating a query needs knowledge about the said internal database structure and SQL.

One way the goal is achieved is by providing a module for building a query on a database 3, comprising a client-side module part 1 and a server-side module part 4, whereby, the client-side module part 1 comprises means for,
a) creating an abstract query object 8 given user-defined query criteria, whereby the user-defined query criteria comprises alias names for elements of data tables 11 contained in the database,
b) sending 5a the abstract query object 8 to a parse and validate entity 4a, the server-side module part comprises means for,
c) extracting mapping information between the alias names and real names of the elements of the data tables 11 from a private configuration table 10, the said private configuration table 10 storing the mapping information according to a valid internal structure of the database at the time of extraction,
d) creating a query on the database 3 by extracting a query configuration from the abstract query object and resolving the alias names contained in the said query configuration by searching the mapping information of the private configuration table,
e) performing the query on the data tables 11,
f) adapting the query results to changes made in said internal structure of the database,
g) extracting 5c a list of available alias names from the mapping information,
h) forwarding the list of the available alias names to the client-side module part,
i) forwarding 5b query results to the client-side

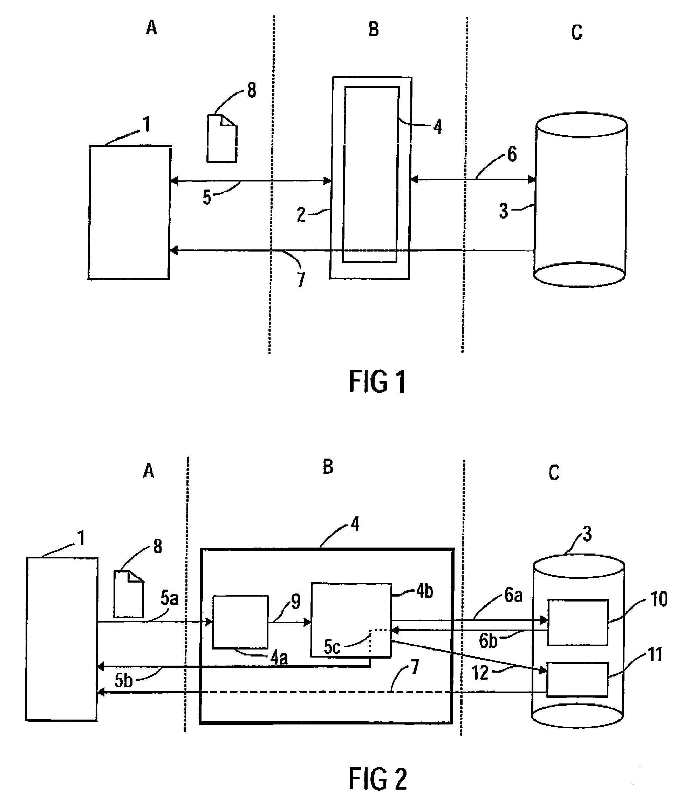

The most important advantage of the proposed module lies in the fact that the user doesn't have to have knowledge about the internal database structure and SQL. Another major advantage is minimizing a need to change queries in case the internal structure of the database is changed. Minimizing means changes in the query only have to be performed in case fields have been deleted from the database. Changes are avoided though in case fields are renamed and/or added. In case fields are added, the user will be provided with information about new search potentials. In case fields are renamed, only the private configuration table 10 has to be changed. This is further described in the explanation of figure 2.

The fact that the abstract query object is an XML query document and the database query is performed by the server-side module part 4 on the data tables 11 using SQL software code advantageously allows the use of these widespread technologies to submit the query, thus making the module usage suitable for a large range of databases.

The step of creating a database query is part of a query generation algorithm 4b, the said query generation algorithm 4b comprising means for transforming the XML query document into the SQL software code, advantageously prevents code insertion by avoiding direct access to an SQL query by the user. This means that for example the possibility to insert malicious executable code and/or manipulate the SQL query directly is avoided, thus rendering the query safe with respect to security issues.

The parse and validate entity 4a incorporated in the server-side module part serves as means to check a consistency of the submitted XML query. Parse means analysing a document with respect to the semantics and eventually adapting the structure of the document according to required rules. Then the document is validated, meaning it is released for further processing and sent to the query generation algorithm. The advantage of the said parse and validate entity is that it improves the reliability of the module by checking every XML query before it is transformed into an SQL query, thus making sure that the query generation algorithm yields correct SQL queries.

According to a preferred embodiment, the private configuration table 10 comprises information about conversion rules for transforming symbolic codes of the elements of the data tables into user-friendly string representations. This advantageously makes the module very flexible in terms of handling of data requested by the user. The user doesn't have to know an internal representation of data but uses a format which is easy to interpret, for example the user can handle database information in the well known ASCII string format but the actual information is stored in the database as hexadecimal representation, the private configuration file containing thus mapping of hexadecimal codes to corresponding letters.

Surely the vice-versa, meaning the private configuration table 10 comprises information about conversion rules for transforming user-friendly string representations inputted by a user into symbolic codes of type of the elements of the data tables, is supported, in order to provide capability for the module to equally store data inputted in a user-friendly way in the database, into the format required by the database. Thus, the conversion rules contained in the private configuration table 10 are used by a conversion algorithm capable of performing at least one of the conversion rules: symbolic codes of the elements of the data tables into user-friendly string representations, user-friendly string representations into symbolic codes of type of the elements of the data tables.

According to a preferred embodiment, the user-defined query criteria comprises at least one of the following elements: fields, conditions, filters. This advantageously extends capabilities of queries beyond a simple search for finding a field, for example a name, by providing the possibility to apply customized search conditions and filters. Taking the example mentioned above of searching for a name, a condition would be for example to take into account only female persons and a filter would be the output of only entries for persons below a certain age.
The user is furthermore assisted in carrying out a query by means of a graphical user interface as part of the client-side module part 1 with means for inputting the user-defined query criteria.

According to a preferred embodiment, the server-side module part 4 comprises means for returning query results, the query results being output to the client-side module part 1 in a format defined by the user before executing the query on the database. This means that the user has possibilities to influence the output format, for example matrices, depending on the client-side supported formats and/or requirements imposed by further processing of query results.
The private configuration table 10 is stored in the database 3. This advantageously enables having a compact format of the database, meaning that all information needed by the module in order to carry out a query is located in one single place. Furthermore, if changes have to be done to the database itself, like changing its structure, the personnel in charge has direct access to the private configuration table, thus being able to update it in order to reflect the changes done to the database.
However, access to the private configuration table 10 by the user is avoided, thus increasing the security of unqualified or fraudulent handling of the said table.
The module provides an application programming interface, suitable for integration into a specific user-developed software program. This means that a functionality of the module is encapsulated into the application programming interface, which can be for example a dynamic link library. The purpose is to offer the functionality to users who employ their own dedicated solutions for database handling purposes. The advantage is that the application programming interface can be integrated in an existing solution with very little programming effort.
Besides the application programming interface being used for proprietary solutions, the standard solution is to provide the module as stand-alone, computer executable program, making the module operate independently, thus advantageously being easy to deploy and update.

The described methods are further explained by the following examples and drawings, whereby:
- Figure 1:: Example of a system comprising a database, a client-side module part and a business logic server.
- Figure 2:: Detailed example of components and their interaction in the system shown in figure 1.

For clarity reasons, both figures are split into a client side A, a server side B and a database side C. Furthermore, a representation of an SQL query document has been intentionally left out.

Figure 1 shows the system comprising a database 3, a client-side module part 1 and a server-side module part 4. The server-side module 4 is incorporated in a business logic server 2. The client side module part 1 is connected to the business logic server 2 by a communication path 5 and the business logic server is connected to the database 3 by a communication path 6. Results of a query issued by the client-side module part 1 via the communication path 5 and 6 are returned by a communication path 7 via the server-side module part 4 to the client-side module part 1. The query is sent via the communication path 5 to the server-side module part 4 in form of an abstract query object 8 which is then further processed by the server-side module part.

Figure 2 shows a detailed description of the components and their interaction in the system shown in figure 1. For clarity reasons, the communication path 5 shown in figure 1 is split into its components 5a and 5b of figure 2 in order to account for the bidirectional nature of communication path 5. For the same reasons, the communication path 6 shown in figure 1 is split into communication paths 6a, 6b and 12 of figure 3. Furthermore, for simplifying the figure, the business logic server 2 is not shown.
The entire process of submitting a query involves the following:
The client-side module part 1 submits a query via the communication path 5a in form of an abstract query object 8 composed of query criteria defined by a user. In this example, the abstract query object 8 represents an XML query document. On the server-side module part a parse and validate entity 4a receives the XML document and checks its semantics and possible errors. If it finds the XML document to be correct, it validates it and passes it on to a query generation algorithm via an internal path 9. The query generation algorithm 4b transforms the validated XML document into an SQL query. The XML document contains alias names for fields to be searched for. Because of this, the query generation algorithm requests via the communication path 6a mapping information from a private configuration table 10 contained in the database 3. The mapping information contains a correlation between the alias names contained in the XML document and real names of fields of the database. With this information, the query generation algorithm 4b is able to generate an SQL query containing valid structure information of the database 3. This mapping information is returned to the query generation algorithm 4b via the communication path 6b. The query generation algorithm 4b eventually detects changes in the private configuration table 10. These changes emerge from various reasons, for example changes in the database structure by addition of a field, by changes in the hierarchy of generic terms, by deletion of a field, by renaming of a field, etc. Thus, there is the possibility that an alias name in an earlier generated query may not match a real name anymore. In this case the current valid alias names are extracted 5c from the mapping information received from the private configuration table and sent to the client-side module part in order to inform the user that a query parameter has to be modified. However a modification in the query has only to be performed by the user in case one or more of the relevant alias names contained in the search has no more matching real name because the field has been deleted from the database. Even in this case, the search is performed if the remaining valid criteria still provide enough information, meaning an amount of valid fields to as a criterion to always trigger a search. The amount of valid fields is user-defined.
If a field has been renamed, only the private configuration table 10 has to be modified accordingly, however this is done by database generating and/or database maintaining personnel. Hence, a new real name of a database field is still mapped to an old alias name. For example an alias name *SECTION* describing a list of persons working in a department of a company is defined in a query, this alias name being matched to a real name in the database called *section.id.* Assuming that, due to a change in the company's structure, the database's real name has to be changed from section.id to *workgroup. id,* the new name is still matched to the alias name *SECTION.* Thus, the query submitted by the user is still valid, although the user does not know about a change in the database.
Moreover, if fields have been added, the user is provided with new information about new search potentials by receiving via 5b an updated list of alias names.
Once the mapping information has been extracted from the private configuration table 10, the SQL query is generated and performed 12 on the data tables of the database. The query result is transmitted back to the server-side module part 4 and forwarded to the client-side module part 1 via the communication path 7.

### List of Abbreviations

- A: = Client Side
- B: = Server Side
- C: = Database Side
- 1: = Client-side Module Part
- 2: = Business Logic Server
- 3: = Database
- 4: = Server Side Module Part
- 4a: = Parse and Validate Entity
- 4b: = Query Generation Algorithm
- 5: = Communication Path between 1 and 2
- 5a: = 1 submits XMI, Query Document to 4a
- 5b: = 1 gets a List of available Alias Names
- 5c: = 4b extracts available Alias Name from the Query Configuration
- 6: = Communication Path between 2 and 3
- 6a =: 4b requests Mapping Information from 3
- 6b =: 4b gets Mapping Information from 3
- 7: = 4 sends Query Results from 3 to 1
- 8: = Abstract Query Object
- 9: = Server-side Module Part Internal Path
- 10 =: Private Configuration Table
- 11: = Data Tables
- 12: = 4b performs Query on 11 using SQL software code

## Claims

1. Module for building a query on a database (3), comprising a client-side module part (1) and a server-side module part (4), whereby, the client-side module part (1) comprises means for,
a) creating an abstract query object (8) given user-defined query criteria, whereby the user-defined query criteria comprises alias names for elements of data tables (11) contained in the database,
b) sending (5a) the abstract query object (8) to a parse and validate entity (4a),
the server-side module part comprises means for,
c) extracting mapping information between the alias names and real names of the elements of the data tables (11) from a private configuration table (10), the said private configuration table (10) storing the mapping information according to a valid internal structure of the database at the time of extraction,
d) creating a query on the database (3) by extracting a query configuration from the abstract query object and resolving the alias names contained in the said query configuration by searching the mapping information of the private configuration table,
e) performing the query on the data tables (11),
f) adapting the query results to changes made in said internal structure of the database,
g) extracting (5c) a list of available alias names from the mapping information,
h) forwarding the list of the available alias names to the client-side module part,
i) forwarding (5b) query results to the client-side module part (1) .

2. Module according to claims 1 or 2, whereby the abstract query object is an XML query document.

3. Module according to one of the preceding claims, whereby the database query is performed by the server-side module part (4) on the data tables (11) using SQL software code.

4. Module according to claim 2 and 3, whereby the step of creating a database query is part of a query generation algorithm (4b), the said query generation algorithm (4b) comprising means for transforming the XML query document into the SQL software code.

5. Module according to one of the preceding claims, comprising a parse and validate entity (4a) incorporated in the server-side module part.

6. Module according to one of the preceding claims, whereby the private configuration table (10) comprises information about conversion rules for transforming symbolic codes of the elements of the data tables into user-friendly string representations.

7. Module according to one of the preceding claims, whereby the private configuration table (10) comprises information about conversion rules for transforming user-friendly string representations inputted by a user into symbolic codes of type of the elements of the data tables.

8. Module according to claims 6 or 7, comprising a conversion algorithm capable of performing at least one of the conversion rules.

9. Module according to one of the preceding claims, whereby the user-defined query criteria comprises at least one of the following elements: fields, conditions, filters.

10. Module according to one of the preceding claims, comprising a graphical user interface as part of the client-side module part (1) with means for inputting the user-defined query criteria.

11. Module according to one of the previous claims, whereby the server-side module part (4) comprises means for returning query results, the query results being output to the client-side module part (1) in a format defined by the user before executing the query on the database.

12. Module according to one of the preceding claims, whereby the private configuration table (10) is stored in the database (3).

13. Module according to one of the preceding claims, whereby access to the private configuration table (10) by the user is avoided.

14. Use of module according to claims 1 to 13, as an application programming interface, suitable for integration into a specific user-developed software program.

15. Use of module according to claims 1 to 13 in a computer executable program.
